# EUROPEAN PATENT APPLICATION

(11) **EP 4 628 759 A1**
(43) Date of publication of application: **08.10.2025**
(21) Application number: 23896475.3
(22) Date of filing: 08.11.2023
(51) Int. Cl.: F16H 57/04, H02K 9/19

(54) **THERMAL MANAGEMENT SYSTEM AND METHOD FOR ELECTRIC DRIVE GEARBOX**

(30) Priority: 30.11.2022 CN 202211512710
(71) Applicant: Sinotruk Group Jinan Power Co., Ltd, West Jinan, Shandong 250000 (CN)
(72) Inventor: YAN, Shufa, Jinan, Shandong 250000 (CN); LIU, Hongwei, Jinan, Shandong 250000 (CN); LI, Bin, Jinan, Shandong 250000 (CN); KONG, Zhuo, Jinan, Shandong 250000 (CN)
(74) Representative: Chung, Hoi Kan
(86) International application number: PCT/CN2023/130361
(87) International publication number: WO 2024/114323

(57) **Abstract**

The present invention provides a thermal management system and method for an electric drive gearbox and relates to the technical field of vehicle thermal management. A cooling fluid in an electric motor flows into a radiator via a flow-dividing valve and a cooling loop and flows back to the electric motor via the radiator; a temperature of the cooling fluid in the electric motor and a temperature of lubricating oil in a gearbox are acquired in real time and are then compared; and when the temperature of the lubricating oil in the gearbox is lower than a lower limit of a target temperature range of the lubricating oil in the gearbox, and the temperature of the cooling fluid in the electric motor is higher than the temperature of the lubricating oil in the gearbox, a control apparatus controls the flow-dividing valve to act, such that the cooling fluid in the electric motor flows into a heat exchanger via the flow-dividing valve and a flow-dividing pipeline and then flows back to the electric motor via the flow-dividing pipeline. The present invention implements mutual heating and cooling between the electric motor and the gearbox, can isolate a heat exchange effect between the lubricating oil in the gearbox and the cooling fluid under an operation condition of cooling system imbalance, and has advantages of a simple structure, stable control, and high reliability.

## Description

### TECHNICAL FIELD

The present invention relates to the technical field of vehicle thermal management, and in particular, to a thermal management system and method for an electric drive gearbox.

### BACKGROUND

Maintaining the temperature of the electric drive system is a key measure to improve its transmission efficiency and ensure its reliability. For electric motors, excessively high operating temperatures will reduce the reliability of the electric motors. For gearboxes, operating temperatures that are too high or too low will significantly reduce the transmission efficiency of the gearboxes and have an adverse impact on the reliability of the gearboxes. Especially when the operating temperatures are too high, the meshing states of the gearboxes will deteriorate, and the transmission parts will experience pitting and even ablation.

At present, the temperature control solutions for the electric motors mainly include two types: air cooling and coolant cooling. The temperature control solutions of the gearboxes mainly include two types: cooling and heating. In the research related to gearbox cooling, three solutions are included: housing natural cooling, air-cooled oil cooler cooling, and liquid-cooled oil cooler cooling. In the research related to gearbox heating, multiple methods are included, such as electric heater heating, engine oil heating, engine cooling fluid heating, engine cylinder heating, and exhaust gas recovery heating.

In the research on comprehensive thermal management of electric drive gearboxes, a Chinese patent application document with application publication number CN101480914A discloses an active thermal management system and method for a transmission usable with a vehicular engine, including a transmission having a transmission fluid, a first pipeline (a heating pipeline), a second pipeline (a cooling pipeline), a valve, and a control apparatus. The transmission fluid of the transmission is heated or cooled by controlling the transmission fluid to flow into the heating pipeline or the cooling pipeline. Although the disclosed solution of this patent can implement the thermal management for the transmission, this patent uses two pipeline systems to heat or cool the transmission fluid, which results in a complex system structure. The control apparatus of this patent only monitors the temperature of the transmission fluid and cannot monitor the temperature of the fluid in the heating pipeline or the cooling pipeline, and when the temperature of the fluid in the heating pipeline is lower than the temperature of the transmission fluid or the temperature of the fluid in the cooling pipeline is higher than the temperature of the transmission fluid, this solution will lead to incorrect management of the transmission fluid. This patent introduces the transmission fluid into an engine cooling system, causing that a part of the transmission fluid is in constant heat exchange with the fluid in a cooling system, and therefore, the problem of high-temperature degradation of the transmission fluid easily occurs under the high-temperature operation condition of the engine cooling system. In addition, this patent needs to use the engine cooling system to limit a cold tank and a hot tank, which cannot be implemented for the electric drive gearbox without a related cooling system.

On the other side, in the active thermal management method for the transmission fluid from the transmission used in the vehicle engine disclosed by this patent, the difference between the temperature of the transmission fluid and the target temperature is sensed only, that is, the heating pipeline or the cooling pipeline can only heat or cool the transmission fluid, but the transmission fluid cannot cool the cooling system of the engine. In addition, the solution of this patent uses a preset target temperature to heat or cool the transmission fluid, which will cause the temperature of the transmission fluid to overshoot and fluctuate around the target temperature, thereby causing the transmission fluid flow control valve to continuously switch, ultimately causing the radiator of the cooling system of the engine to constantly start and stop.

### SUMMARY

### Technical Problem

The present invention provides a thermal management system for an electric drive gearbox, and the system has advantages of a simple structure, stable control, and high reliability.

### Technical Solution

A thermal management system for an electric drive gearbox includes a control apparatus, a flow-dividing valve, a radiator, a heat exchanger, an electric motor having a cooling fluid, and a gearbox having lubricating oil;
an output end of the gearbox is connected to an oil input end of the heat exchanger through an oil pipeline, and an oil output end of the heat exchanger is connected to an input end of the gearbox through the oil pipeline;
an output end of the electric motor is connected to an input end of the flow-dividing valve, and a first output end of the flow-dividing valve is connected to an exchange input end of the heat exchanger through a flow-dividing pipeline; and an exchange output end of the heat exchanger is connected to a first input end of the electric motor through the flow-dividing pipeline;
a second output end of the flow-dividing valve is connected to an input end of the radiator through a cooling loop, and an output end of the radiator is connected to a second input end of the electric motor; and
the control apparatus is configured to acquire an upper limit value of a target temperature of the cooling fluid in the electric motor, a range of a target temperature of the lubricating oil in the gearbox, a temperature of the lubricating oil in the gearbox, and a temperature of the cooling fluid in the electric motor and respectively control the flow-dividing valve and the electric motor to operate according to acquired temperature information.

It needs to be further noted that the input end and the output end that are of the gearbox are provided with a first temperature sensor respectively;
the input end and the output end that are of the electric motor are provided with a second temperature sensor respectively;
the control apparatus acquires temperature information of the lubricating oil in the gearbox by connecting to the first temperature sensor; and
the control apparatus acquires temperature information of the cooling fluid in the electric motor by connecting to the second temperature sensor.

It needs to be further noted that the upper limit value, acquired by the control apparatus, of the target temperature of the cooling fluid in the electric motor is from 65°C to 70°C; and
the range of the target temperature of the lubricating oil in the gearbox is from 80°C to 100°C.

It needs to be further noted that the control apparatus includes: a configuration module, an acquisition module, a comparison module, and an execution module;
the configuration module is configured to acquire the upper limit value, set by a user, of the target temperature of the cooling fluid in the electric motor and the range of the target temperature of the lubricating oil in the gearbox;
the acquisition module is configured to acquire the temperature of the lubricating oil in the gearbox and the temperature of the cooling fluid in the electric motor;
the comparison module is configured to: compare the temperature of the lubricating oil in the gearbox with the range of the target temperature of the lubricating oil in the gearbox, and compare the temperature of the cooling fluid in the electric motor with the upper limit value of the target temperature of the cooling fluid in the electric motor; and
the control module is configured to generate corresponding valve control information according to a comparison result of the comparison module and control the flow-dividing valve to operate.

The present invention further provides a thermal management method for an electric drive gearbox, and the method includes:
S101: starting the system, where a cooling fluid in an electric motor flows into a radiator via a flow-dividing valve and a cooling loop and flows back to the electric motor via the radiator;
S102: acquiring an upper limit value of a target temperature of the cooling fluid in the electric motor and a range of a target temperature of lubricating oil in a gearbox;
S103: acquiring a temperature T_{water} of the cooling fluid in the electric motor and a temperature Tₒᵢₗ of the lubricating oil in the gearbox in real time;
S104: respectively comparing the acquired temperature T_{water} of the cooling fluid in the electric motor and the acquired temperature Tₒᵢₗ of the lubricating oil in the gearbox with the upper limit value of the target temperature of the cooling fluid in the electric motor and the range of the target temperature of the lubricating oil in the gearbox correspondingly; and
S105: when the temperature Tₒᵢₗ of the lubricating oil in the gearbox is lower than a lower limit T_{oil lower limit} of the range of the target temperature of the lubricating oil in the gearbox, and the temperature T_{water} of the cooling fluid in the electric motor is higher than the temperature Tₒᵢₗ of the lubricating oil in the gearbox, controlling, by a control apparatus, a flow-dividing valve to act, to enable the cooling fluid in the electric motor to flow into a heat exchanger via the flow-dividing valve and a flow-dividing pipeline and flow back to the electric motor via the flow-dividing pipeline.

It needs to be further noted that after S104, the method further includes: when a vehicle is operated at a high speed and with a heavy load, the temperature Tₒᵢₗ of the lubricating oil in the gearbox is higher than an upper limit T_{oil upper limit} of the range of the target temperature of the lubricating oil in the gearbox, and the temperature T_{water} of the cooling fluid in the electric motor is lower than the temperature Tₒᵢₗ of the lubricating oil in the gearbox, controlling, by the control apparatus, the flow-dividing valve to act, to enable the cooling fluid in the electric motor to flow into the heat exchanger via the flow-dividing valve and the flow-dividing pipeline and flow back to the electric motor via the flow-dividing pipeline.

It needs to be further noted that after S104, the method further includes:
when a vehicle recovers braking energy during continuous downhill driving, the temperature T_{water} of the cooling fluid in the electric motor is higher than the upper limit value T_{water upper limit} of the target temperature of the cooling fluid in the electric motor, the temperature Tₒᵢₗ of the lubricating oil in the gearbox is lower than an upper limit T_{oil upper limit} of the range of the target temperature of the lubricating oil in the gearbox, and the temperature Tₒᵢₗ of the lubricating oil in the gearbox is lower than the temperature T_{water} of the cooling fluid in the electric motor, controlling, by the control apparatus, the flow-dividing valve to act, to enable the cooling fluid in the electric motor to flow into the heat exchanger via the flow-dividing valve and the flow-dividing pipeline and flow back to the electric motor via the flow-dividing pipeline.

It needs to be further noted that the upper limit value, acquired by the control apparatus in S104, of the target temperature of the cooling fluid in the electric motor is from 65°C to 70°C; and
the range of the target temperature of the lubricating oil in the gearbox is from 80°C to 100°C.

### Beneficial Effects

According to the thermal management system and method for an electric drive gearbox provided by the present invention, through the flow-dividing pipeline, the valve, the heat exchanger, and the control apparatus that are communicated with the cooling loop of the electric motor, heat exchange between the lubricating oil in the gearbox and the cooling fluid in the electric motor can be controlled, mutual heating and cooling between the lubricating oil in the gearbox and the cooling fluid in the electric motor can be implemented, and the electric drive gearbox can be kept working in a proper temperature condition.

According to the method and system provided by the present invention, in a low-temperature operation condition of the gearbox, the temperature of the lubricating oil in the gearbox is improved, and transmission efficiency of the gearbox is improved; in a high-temperature operation condition, the temperature of the lubricating oil in the gearbox is reduced, the transmission efficiency of the gearbox is improved, a service life of the lubricating oil in the gearbox is prolonged, and working reliability of the gearbox is ensured; and in a high-temperature operation condition of the electric motor, the temperature of the cooling fluid in the electric motor is reduced, and working reliability of the electric motor is ensured.

Compared with an existing gearbox thermal management technology, the method provided by the present invention can implement the mutual heating and cooling between the electric motor and the gearbox, can isolate a heat exchange effect between the lubricating oil in the gearbox and the cooling fluid under an operation condition of cooling system imbalance, and has advantages of a simple structure, stable control, and high reliability.

### BRIEF DESCRIPTION OF DRAWINGS

To describe the technical solutions of the present invention more clearly, the following briefly introduces the accompanying drawings required for description. Apparently, the accompanying drawings in the following description show merely some embodiments of the present invention, and those of ordinary skill in the art may still derive other accompanying drawings from these accompanying drawings without creative efforts.
FIG. 1 is a schematic diagram of a thermal management system for an electric drive gearbox;
FIG. 2 is a schematic diagram of a control apparatus; and
FIG. 3 is a schematic diagram of a thermal management method for an electric drive gearbox.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. Based on the embodiments in the present invention, all other embodiments acquired by those of ordinary skill in the art without making creative efforts shall fall within the scope of protection of the present invention.

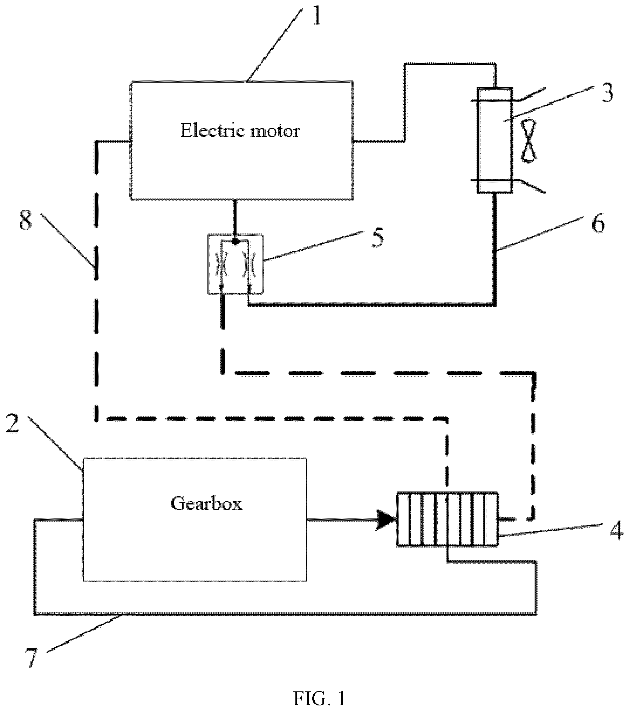

As shown in FIG. 1, a diagram provided in a thermal management system for an electric drive gearbox provided by the present invention only illustrates the basic concept of the present invention in a schematic manner, and thus the diagram only shows assemblies related to the present invention rather than being drawn according to the quantity, shape, and size of the assemblies in actual implementation. In actual implementation, the type, quantity, and proportion of the assemblies may be changed arbitrarily, and the layout of the assemblies may also be more complicated.

FIG. 1 is a schematic diagram of the thermal management system for an electric drive gearbox according to a preferred embodiment of the present invention. The thermal management system of an electric drive gearbox includes a control apparatus. The control apparatus is a device that can automatically perform numerical calculation and/or information processing according to a preset or prestored instruction, and hardware of the control apparatus includes but is not limited to a microprocessor, an application specific integrated circuit (ASIC), a field-programmable gate array (FPGA), a digital signal processor (DSP), an embedded device, and the like.

The thermal management system for an electric drive gearbox specifically includes the control apparatus, a flow-dividing valve 5, a radiator 3, a heat exchanger 4, an electric motor 1 having a cooling fluid, and a gearbox 2 having lubricating oil.

The present invention relates to three sets of loops. One loop is a cooling loop 6 having the cooling fluid that cools the electric motor 1. Another loop is an oil pipeline 7 having the lubricating oil that lubricates the gearbox 2. The present invention further relates to a flow-dividing pipeline 8. The heat exchanger 4 is disposed on the flow-dividing pipeline 8, to implement heat exchange between the cooling fluid and the lubricating oil.

As an embodiment of the present invention, the system is formed by the electric motor 1 having the cooling fluid, the gearbox 2 having the lubricating oil, the heat exchanger 4 communicated with the lubricating oil in the gearbox, a cooling system that has the cooling loop 6 and the radiator 3 and that is of the electric motor 1, the flow-dividing pipeline 8 communicated with the heat exchanger 4 and the cooling loop 6 of the electric motor 1, and a valve controlling the cooling fluids in the cooling loop 6 of the electric motor 1 and in the flow-dividing pipeline 8 to flow.

A specific connection relationship is as follows: an output end of the gearbox 2 is connected to an oil input end of the heat exchanger 4 through the oil pipeline 7, and an oil output end of the heat exchanger 4 is connected to an input end of the gearbox 2 through the oil pipeline 7; an output end of the electric motor 1 is connected to an input end of the flow-dividing valve 5, and a first output end of the flow-dividing valve 5 is connected to an exchange input end of the heat exchanger 4 through the flow-dividing pipeline 8; an exchange output end of the heat exchanger 4 is connected to a first input end of the electric motor 1 through the flow-dividing pipeline 8; and a second output end of the flow-dividing valve 5 is connected to an input end of the radiator 3 through the cooling loop 6, and an output end of the radiator 3 is connected to a second input end of the electric motor 1.

The control apparatus is configured to acquire an upper limit value of a target temperature of the cooling fluid in the electric motor 1, a range of a target temperature of the lubricating oil in the gearbox, a temperature of the lubricating oil in the gearbox, and a temperature of the cooling fluid in the electric motor 1 and respectively control the flow-dividing valve 5 and the electric motor 1 to operate according to acquired temperature information.

The input end and the output end that are of the gearbox 2 are provided with a first temperature sensor respectively; the input end and the output end that are of the electric motor 1 are provided with a second temperature sensor respectively; the control apparatus acquires temperature information of the lubricating oil in the gearbox by connecting to the first temperature sensor; and the control apparatus acquires temperature information of the cooling fluid in the electric motor 1 by connecting to the second temperature sensor.

For example, the upper limit value, acquired by the control apparatus, of the target temperature of the cooling fluid in the electric motor 1 is from 65°C to 70°C; and the range of the target temperature of the lubricating oil in the gearbox is from 80°C to 100°C.

The thermal management system for an electric drive gearbox of the present invention is obtained based on temperature monitoring, logical judgment, and fluid control, which may better implement thermal management of the electric drive gearbox, thereby improving transmission efficiency and reliability of the gearbox.

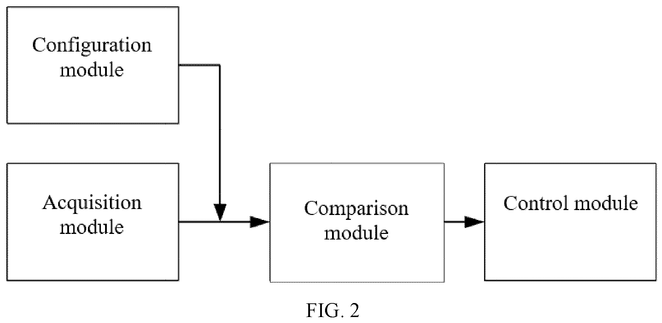

In this embodiment provided by the present invention, as shown in FIG. 2, the control apparatus includes: a configuration module, an acquisition module, a comparison module, and an execution module;
the configuration module is configured to acquire the upper limit value, set by a user, of the target temperature of the cooling fluid in the electric motor and the range of the target temperature of the lubricating oil in the gearbox;
the acquisition module is configured to acquire the temperature of the lubricating oil in the gearbox and the temperature of the cooling fluid in the electric motor;
the comparison module is configured to: compare the temperature of the lubricating oil in the gearbox with the range of the target temperature of the lubricating oil in the gearbox, and compare the temperature of the cooling fluid in the electric motor with the upper limit value of the target temperature of the cooling fluid in the electric motor; and
the control module is configured to generate corresponding valve control information according to a comparison result of the comparison module and control the flow-dividing valve to operate.

The system may be automatically controlled based on the control apparatus, and an implementation manner is as follows: setting the upper limit value of the target temperature of the cooling fluid in the electric motor and the range of the target temperature of the lubricating oil in the gearbox; performing logical judgment based on the acquired temperature of the cooling fluid and the acquired temperature of the lubricating oil to generate valve control information; and finally, implementing the thermal management of the electric drive gearbox by using the valve to adjust flow of the cooling fluid in the flow-dividing pipeline.

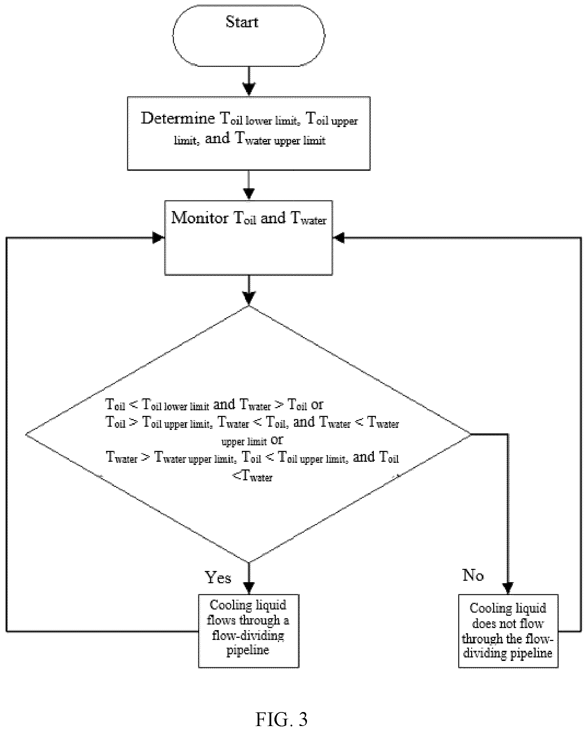

In an embodiment of the present invention, based on the thermal management system for an electric drive gearbox, as shown in FIG. 3, the following will provide an embodiment of a thermal management method for an electric drive gearbox to illustrate a specific implementation solution of the embodiment in a non-limiting manner.
S101: starting the system, where a cooling fluid in an electric motor flows into a radiator via a flow-dividing valve and a cooling loop and flows back to the electric motor via the radiator;
S102: acquiring an upper limit value of a target temperature of the cooling fluid in the electric motor and a range of a target temperature of lubricating oil in a gearbox, where the upper limit value, acquired by a control apparatus, of the target temperature of the cooling fluid in the electric motor is from 65°C to 70°C; and the range of the target temperature of the lubricating oil in the gearbox is from 80°C to 100°C;
S103: acquiring a temperature T_{water} of the cooling fluid in the electric motor and a temperature Tₒᵢₗ of the lubricating oil in the gearbox in real time;
S104: respectively comparing the acquired temperature T_{water} of the cooling fluid in the electric motor and the acquired temperature Tₒᵢₗ of the lubricating oil in the gearbox with the upper limit value of the target temperature of the cooling fluid in the electric motor and the range of the target temperature of the lubricating oil in the gearbox correspondingly, where
   a T_{oil lower limit}, a T_{oil upper limit}, and a T_{water upper limit} are set based on temperatures of the electric motor and the gearbox at an optimum level for a specific application; and
S105: when the temperature Tₒᵢₗ of the lubricating oil in the gearbox is lower than the lower limit T_{oil lower limit} of the range of the target temperature of the lubricating oil in the gearbox, and the temperature T_{water} of the cooling fluid in the electric motor is higher than the temperature Tₒᵢₗ of the lubricating oil in the gearbox, controlling, by the control apparatus, a flow-dividing valve to act, to enable the cooling fluid in the electric motor to flow into a heat exchanger via the flow-dividing valve and a flow-dividing pipeline and flow back to the electric motor via the flow-dividing pipeline.

In a preferred application scenario, when just starting up, the cooling fluid in the electric motor is used to rapidly heat the lubricating oil in the gearbox, to accelerate a temperature-rising process of the lubricating oil in the gearbox, thereby improving the transmission efficiency.

When a vehicle is operated at a high speed and with a heavy load, the temperature Tₒᵢₗ of the lubricating oil in the gearbox is higher than the upper limit T_{oil upper limit} of the range of the target temperature of the lubricating oil in the gearbox, and the temperature T_{water} of the cooling fluid in the electric motor is lower than the temperature Tₒᵢₗ of the lubricating oil in the gearbox, the control apparatus controls the flow-dividing valve to act, to enable the cooling fluid in the electric motor to flow into the heat exchanger via the flow-dividing valve and the flow-dividing pipeline and flow back to the electric motor via the flow-dividing pipeline. In this way, the cooling fluid in the electric motor may be guided to pass through the heat exchanger. To be specific, when the vehicle is operated at the high speed and with the heavy load, the cooling fluid in the electric motor is used to cool the lubricating oil in the gearbox, to avoid a high-temperature phenomenon of the lubricating oil in the gearbox and reduce a risk of high-temperature degradation of gear oil.

When the vehicle recovers braking energy during continuous downhill driving, the temperature T_{water} of the cooling fluid in the electric motor is higher than the upper limit value T_{water upper limit} of the target temperature of the cooling fluid in the electric motor, the temperature Tₒᵢₗ of the lubricating oil in the gearbox is lower than the upper limit T_{oil upper limit} of the range of the target temperature of the lubricating oil in the gearbox, and the temperature Tₒᵢₗ of the lubricating oil in the gearbox is lower than the temperature T_{water} of the cooling fluid in the electric motor, the control apparatus controls the flow-dividing valve to act, to enable the cooling fluid in the electric motor to flow into the heat exchanger via the flow-dividing valve and the flow-dividing pipeline and flow back to the electric motor via the flow-dividing pipeline. In this way, the cooling fluid in the electric motor may be guided to pass through the heat exchanger. To be specific, when the vehicle recovers the braking energy during the continuous downhill driving, the lubricating oil in the gearbox is used to cool the cooling fluid in the electric motor, to reduce working energy consumption of the radiator and reduce a risk of a high-temperature fault of the electric motor.

In addition to the above situation, the cooling fluid in the electric motor does not pass through the heat exchanger. The cooling fluid in the electric motor only flows through the cooling loop of the electric motor and does not flow through the heat exchanger of the gearbox.

It should be understood that the serial number of each step in the above embodiments does not indicate the execution sequence, which should be determined by the function and internal logic of the step, and shall not limit the implementation of the embodiments of the present invention.

According to the thermal management system and method for an electric drive gearbox provided by the present invention, through the flow-dividing pipeline, the valve, the heat exchanger, and the control apparatus that are communicated with the cooling loop of the electric motor, heat exchange between the lubricating oil in the gearbox and the cooling fluid in the electric motor can be controlled, mutual heating and cooling between the lubricating oil in the gearbox and the cooling fluid in the electric motor can be implemented, and the electric drive gearbox can be kept working in a proper temperature condition.

According to the method and system provided by the present invention, in a low-temperature operation condition of the gearbox, the temperature of the lubricating oil in the gearbox is improved, and transmission efficiency of the gearbox is improved; in a high-temperature operation condition, the temperature of the lubricating oil in the gearbox is reduced, the transmission efficiency of the gearbox is improved, a service life of the lubricating oil in the gearbox is prolonged, and working reliability of the gearbox is ensured; and in a high-temperature operation condition of the electric motor, the temperature of the cooling fluid in the electric motor is reduced, and working reliability of the electric motor is ensured.

Compared with an existing gearbox thermal management technology, the method provided by the present invention can implement the mutual heating and cooling between the electric motor and the gearbox, can isolate a heat exchange effect between the lubricating oil in the gearbox and the cooling fluid under an operation condition of cooling system imbalance, and has advantages of a simple structure, stable control, and high reliability.

Units and algorithm steps of various examples described in the embodiments disclosed in the thermal management system and method for an electric drive gearbox provided by the present invention can be implemented in a manner of electronic hardware, computer software, or combination of the hardware and the software. In order to clearly illustrate interchangeability of the hardware and the software, composition and steps of various examples have been described in general terms of functionality in the above description. Whether the functions are performed in a manner of hardware or software depends on particular applications and design constraints of the technical solutions. Those skilled in the art may use different methods to implement the described functions for each specific application, but such implementation should not be considered to be beyond the scope of the present invention.

The block diagrams shown in the accompanying drawings of the thermal management system for an electric drive gearbox are merely functional entities and do not necessarily have to correspond to physically or logically separate entities. To be specific, these functional entities may be implemented in software, or implemented in one or more hardware modules or integrated circuits, or implemented in different networks and/or processor apparatuses and/or microcontroller apparatuses.

In the thermal management system for an electric drive gearbox provided by the present invention, it should be understood that the disclosed system, apparatus, and method may be implemented in other manners. The apparatus embodiments described above are only for illustration. For example, the division of the units is only a logical function division. In actual implementations, there may be other division means. For example, multiple units or components may be combined or may be integrated into another system, or some features may be disregarded or left unimplemented. In addition, displayed or discussed mutual coupling, or direct coupling, or communication connection can be indirect coupling or communication connection through some interfaces, apparatuses, or units or may be electrical, mechanical, or in other forms.

The terms "first", "second", "third", "fourth", and so on (if any) in the specification and claims of the present invention and in the above accompanying drawings are intended to distinguish between similar objects but do not necessarily indicate a specific order or sequence. It should be understood that the data used in this way can be interchanged where appropriate so that the embodiments of the present invention described herein may be implemented in an order other than those illustrated or described herein. In addition, the terms "including", "having", or any other variant thereof are intended for covering non-exclusive inclusions.

The above description of the disclosed embodiments enables a person skilled in the art to implement or use the present invention. Various modifications to these embodiments will be readily apparent to a person skilled in the art, and the generic principles defined herein may be implemented in other embodiments without departing from the spirit or scope of the present invention. Therefore, the present invention is not intended to be limited to the embodiments shown herein, but is to be in accordance with the widest scope consistent with the principles and novel features disclosed herein.

## Claims

1. A thermal management system for an electric drive gearbox, **characterized by** comprising a control apparatus, a flow-dividing valve, a radiator, a heat exchanger, an electric motor having a cooling fluid, and a gearbox having lubricating oil, wherein
an output end of the gearbox is connected to an oil input end of the heat exchanger through an oil pipeline, and an oil output end of the heat exchanger is connected to an input end of the gearbox through the oil pipeline;
an output end of the electric motor is connected to an input end of the flow-dividing valve, and a first output end of the flow-dividing valve is connected to an exchange input end of the heat exchanger through a flow-dividing pipeline; and an exchange output end of the heat exchanger is connected to a first input end of the electric motor through the flow-dividing pipeline;
a second output end of the flow-dividing valve is connected to an input end of the radiator through a cooling loop, and an output end of the radiator is connected to a second input end of the electric motor; and
the control apparatus is configured to acquire an upper limit value of a target temperature of the cooling fluid in the electric motor, a range of a target temperature of the lubricating oil in the gearbox, a temperature of the lubricating oil in the gearbox, and a temperature of the cooling fluid in the electric motor and respectively control the flow-dividing valve and the electric motor to operate according to acquired temperature information.

2. The thermal management system for an electric drive gearbox according to claim 1, **characterized in that**
the input end and the output end that are of the gearbox are provided with a first temperature sensor respectively;
the input end and the output end that are of the electric motor are provided with a second temperature sensor respectively;
the control apparatus acquires temperature information of the lubricating oil in the gearbox by connecting to the first temperature sensor; and
the control apparatus acquires temperature information of the cooling fluid in the electric motor by connecting to the second temperature sensor.

3. The thermal management system for an electric drive gearbox according to claim 1, **characterized in that**
the upper limit value, acquired by the control apparatus, of the target temperature of the cooling fluid in the electric motor is from 65°C to 70°C; and
the range of the target temperature of the lubricating oil in the gearbox is from 80°C to 100°C.

4. The thermal management system for an electric drive gearbox according to claim 1, **characterized in that**
the control apparatus comprises: a configuration module, an acquisition module, a comparison module, and an execution module;
the configuration module is configured to acquire the upper limit value, set by a user, of the target temperature of the cooling fluid in the electric motor and the range of the target temperature of the lubricating oil in the gearbox;
the acquisition module is configured to acquire the temperature of the lubricating oil in the gearbox and the temperature of the cooling fluid in the electric motor;
the comparison module is configured to: compare the temperature of the lubricating oil in the gearbox with the range of the target temperature of the lubricating oil in the gearbox, and compare the temperature of the cooling fluid in the electric motor with the upper limit value of the target temperature of the cooling fluid in the electric motor; and
the control module is configured to generate corresponding valve control information according to a comparison result of the comparison module and control the flow-dividing valve to operate.

5. A thermal management method for an electric drive gearbox, **characterized in that** the method adopts the thermal management system for an electric drive gearbox according to claim 4; and
the method comprises:
S101: starting the system, wherein a cooling fluid in an electric motor flows into a radiator via a flow-dividing valve and a cooling loop and flows back to the electric motor via the radiator;
S102: acquiring an upper limit value of a target temperature of the cooling fluid in the electric motor and a range of a target temperature of lubricating oil in a gearbox;
S103: acquiring a temperature T_{water} of the cooling fluid in the electric motor and a temperature Tₒᵢₗ of the lubricating oil in the gearbox in real time;
S104: respectively comparing the acquired temperature T_{water} of the cooling fluid in the electric motor and the acquired temperature Tₒᵢₗ of the lubricating oil in the gearbox with the upper limit value of the target temperature of the cooling fluid in the electric motor and the range of the target temperature of the lubricating oil in the gearbox correspondingly; and
S105: when the temperature Tₒᵢₗ of the lubricating oil in the gearbox is lower than a lower limit T_{oil lower limit} of the range of the target temperature of the lubricating oil in the gearbox, and the temperature T_{water} of the cooling fluid in the electric motor is higher than the temperature Tₒᵢₗ of the lubricating oil in the gearbox, controlling, by a control apparatus, a flow-dividing valve to act, to enable the cooling fluid in the electric motor to flow into a heat exchanger via the flow-dividing valve and a flow-dividing pipeline and flow back to the electric motor via the flow-dividing pipeline.

6. The thermal management method for an electric drive gearbox according to claim 5, **characterized in that**
after S104, the method further comprises: when a vehicle is operated at a high speed and with a heavy load, the temperature Tₒᵢₗ of the lubricating oil in the gearbox is higher than an upper limit T_{oil upper limit} of the range of the target temperature of the lubricating oil in the gearbox, and the temperature T_{water} of the cooling fluid in the electric motor is lower than the temperature Tₒᵢₗ of the lubricating oil in the gearbox, controlling, by the control apparatus, the flow-dividing valve to act, to enable the cooling fluid in the electric motor to flow into the heat exchanger via the flow-dividing valve and the flow-dividing pipeline and flow back to the electric motor via the flow-dividing pipeline.

7. The thermal management method for an electric drive gearbox according to claim 5, **characterized in that**
after S104, the method further comprises:
when a vehicle recovers braking energy during continuous downhill driving, the temperature T_{water} of the cooling fluid in the electric motor is higher than the upper limit value T_{water upper limit} of the target temperature of the cooling fluid in the electric motor, the temperature Tₒᵢₗ of the lubricating oil in the gearbox is lower than an upper limit T_{oil upper limit} of the range of the target temperature of the lubricating oil in the gearbox, and the temperature Tₒᵢₗ of the lubricating oil in the gearbox is lower than the temperature T_{water} of the cooling fluid in the electric motor, controlling, by the control apparatus, the flow-dividing valve to act, to enable the cooling fluid in the electric motor to flow into the heat exchanger via the flow-dividing valve and the flow-dividing pipeline and flow back to the electric motor via the flow-dividing pipeline.

8. The thermal management method for an electric drive gearbox according to claim 5, **characterized in that**
the upper limit value, acquired by the control apparatus in S104, of the target temperature of the cooling fluid in the electric motor is from 65°C to 70°C; and
the range of the target temperature of the lubricating oil in the gearbox is from 80°C to 100°C.
